(19) Europäisches Patentamt
European Patent Office
Office européen des brevets

(11) Veröffentlichungsnummer : **0 069 700**
**B1**

(12) # EUROPÄISCHE PATENTSCHRIFT

(45) Veröffentlichungstag der Patentschrift : **19.12.84**

(51) Int. Cl.$^3$ : **C 08 G 69/26**

(21) Anmeldenummer : **82810257.4**

(22) Anmeldetag : **14.06.82**

(54) **Transparente Polyamide, Verfahren zu deren Herstellung und deren Verwendung zur Herstellung von Formkörpern.**

(30) Priorität : **19.06.81 GB 8119013**

(43) Veröffentlichungstag der Anmeldung : **12.01.83 Patentblatt 83/02**

(45) Bekanntmachung des Hinweises auf die Patenterteilung : **19.12.84 Patentblatt 84/51**

(84) Benannte Vertragsstaaten : **CH DE FR GB IT LI NL**

(56) Entgegenhaltungen :
**US-A- 3 776 890**
**US-A- 4 024 185**
**US-A- 4 130 579**

(73) Patentinhaber : **CIBA-GEIGY AG**
**Postfach**
**CH-4002 Basel (CH)**

(72) Erfinder : **Pfeifer, Josef, Dr.**
**Brunnmattstrasse 32**
**CH-4106 Therwil (CH)**

**EP 0 069 700 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft neue transparente Polyamide, Verfahren zu deren Herstellung sowie deren Verwendung zur Herstellung von Formkörpern.

In den US-PS 3 776 890 und 4 024 185 sind Polyamide aus 2-(4-Aminocyclohexyl)-1,1-dimethyläthylamin oder 2-(4-Aminophenyl)-1,1-dimethyläthylamin und aliphatischen, aromatischen oder aliphatisch-aromatischen Dicarbonsäuren oder amidbildenden Derivaten davon beschrieben. Diese Polyamide sind zum Teil kristallin. Sie absorbieren beträchtliche Mengen Wasser und sind in Bezug auf Hydrolysebeständigkeit und/oder Dimensionsstabilität unter dem Einfluss von Feuchtigkeit nicht voll zufriedenstellend, wodurch auch deren mechanische und elektrische Eigenschaften beeinträchtigt werden. Zudem sind die Glasumwandlungstemperaturen dieser Polyamide stark feuchtigkeitsabhängig, und Polyamide aus den oben genannten Diaminen und aromatischen Dicarbonsäuren oder amidbildenden Derivaten davon lassen sich nicht aus der Schmelze verarbeiten [vgl. auch Journal of Polymer Science : Polymer Chemistry Edition, Bd. 16, 2025-2038 (1978)].

Die vorliegende Erfindung betrifft neue transparente Polyamide, die sich durch verbesserte thermoplastische Verarbeitbarkeit, gute Kochwasserbeständigkeit sowie niedrige Wasseraufnahme, hohe Hydrolysebeständigkeit, gute Dimensionsstabilität unter dem Einfluss von Feuchtigkeit und entsprechend verbesserte mechanische und elektrische Eigenschaften auszeichnen.

Die neuen erfindungsgemässen Polyamide haben eine reduzierte spezifische Viskosität (im folgenden auch reduzierte Lösungsviskosität genannt) von mindestens 0,3 dl/g, vorzugsweise etwa 0,5 bis etwa 2,0 dl/g und insbesondere etwa 0,7 bis etwa 1,8 dl/g, gemessen an einer 0,5 %igen Lösung in m-Kresol bei 25 °C bestehen aus wiederkehrenden Strukturelementen der Formel I

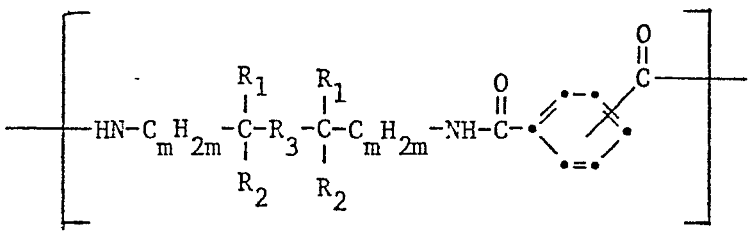
(I)

worin

die beiden m unabhängig voneinander eine ganze Zahl von 4 bis 16,
die beiden $R_1$ unabhängig voneinander $C_{1-3}$-Alkyl,
die beiden $R_2$ unabhängig voneinander $C_{1-6}$-Alkyl und
$R_3$ 1,4-Phenylen oder

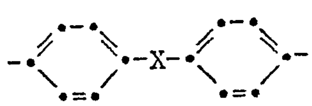

bedeuten, worin X die direkte Bindung, $—CH_2—$, —O—, —S— oder —NH— darstellt und wobei die Carbonylgruppen in 1,3- und/oder 1,4-Stellung an den Benzolring gebunden sind.

Vorzugsweise haben die beiden m dieselbe Bedeutung, stellen die beiden $R_1$ identische Alkylgruppen dar und sind die beiden $R_2$ gleiche Alkylgruppen.

Alkylgruppen $R_1$ und $R_2$ können geradkettig oder verzweigt sein. Beispiele solcher Alkylgruppen sind die Methyl-, Äthyl-, n-Propyl-, Isopropyl-, n-Butyl-, sek-Butyl-, n-Pentyl- und n-Hexylgruppe. $R_1$ stellt bevorzugt Methyl oder Äthyl dar. Bevorzugte Gruppen $R_2$ sind Alkylgruppen mit 1-4 C-Atomen, besonders Methyl, Äthyl und Isopropyl. Die Gruppen $—C_mH_{2m}—$ können ebenfalls geradkettig oder verzweigt sein, wobei die Verzweigung vorzugsweise nicht vicinal zur Gruppe $C(R_1)(R_2)—$ ist. Beispiele solcher Gruppen $—C_mH_{2m}—$ sind die Tetramethylen-, 4-Methyltetramethylen-, Pentamethylen-, 2,2-Dimethylpentamethylen-, Hexamethylen-, Heptamethylen-, Octamethylen-, Nonamethylen-, 9-Methylnonamethylen, 9-Äthylnonamethylen-, 9-Isopropylnonamethylen-, Decamethylen-10-Methyldecamethylen-, 10-Ethyldecamethylen-, 10-Isopropyldecamethylen-, Undecamethylen-, Dodecamethylen-, Tridecamethylen-, Tetradecamethylen-, Pentadecamethylen- und Hexadecamethylengruppe. Bevorzugte Gruppen $—C_mH_{2m}—$ sind solche der Formeln $—(CH_2)_9—CH(CH_3)—$, $—(CH_2)_8—CH(R_4)—$ oder $—(CH_2)_9—CH(R_4)—$, worin die —CH-Gruppe an das Stickstoffatome gebunden ist und $R_4$. geradkettiges oder verzweigtes Alkyl mit 1-6 C-Atomen bedeutet.

Bevorzugte Polyamide bestehen aus wiederkehrenden Strukturelementen der Formel I, worin die $R_1$ je Methyl oder Äthyl, die $R_2$ je $C_{1-4}$-Alkyl, besonders Methyl, Äthyl oder Isopropyl, die $—C_mH_{2m}—$ je $—(CH_2)_3—CH(CH_3)—$, $—(CH_2)_8—CH(R_4)—$ oder $—(CH_2)_9—CH(R_4)—$ mit an das Stickstoffatom ge-

bundener —CH-Gruppe und $R_4$ $C_{1-4}$-Alkyl, insbesonders Isopropyl darstellen, $R_3$ 1,4-Phenylen oder eine Gruppe

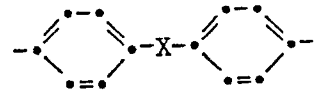

bedeutet, worin X direkte Bindung, $—CH_2—$, —O— oder —NH— darstellt. Besonders bevorzugt sind Polyamide aus wiederkehrenden strukturelementen der Formel I, worin die $R_1$ je Methyl, die $R_2$ je Methyl oder Äthyl, die $—C_mH_{2m}—$ je

$-(CH_2)_3-CH(CH_3)-$, 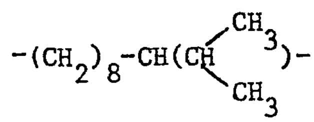 oder 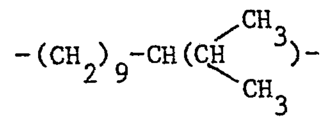

darstellen und $R_3$ die oben genannte bevorzugte Bedeutung hat.

Bei diesen bevorzugten Ausführungsformen sind die Carbonylgruppen entweder in 1,3- oder in 1,4-Stellung an den Benzolring gebunden.

Die erfindungsgemässen Polyamide können durch die Umsetzung eines Diamins der Formel II

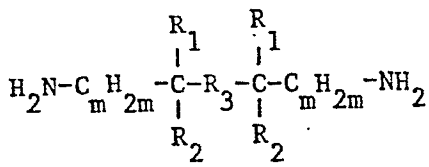

(II)

worin m, $R_1$, $R_2$ und $R_3$ die unter Formel I angegebene Bedeutung haben, mit Isophthalsäure und/oder Terephthalsäure oder amidbildenden Derivaten davon erhalten werden. Geeignete amidbildende Derivate der Isophthalsäure oder Terephthalsäure sind z. B. die entsprechenden Dinitrile oder Dialkylester mit je 1-4 C-Atomen in den Alkylgruppen. Die Verwendung der freien Säuren ist jedoch bevorzugt.

Vorzugsweise erfolgt die Herstellung durch Schmelzpolykondensation in mehreren Stufen. In diesem Falle werden die Diamine mit im wesentlichen stöchiometrischen Mengen Iso- und/oder Terephthalsäure in einem geschlossenen Gefäss, gegebenenfalls unter Zusatz von Wasser, unter einem Inertgas und bei Temperaturen zwischen etwa 240 und 290 °C vorkondensiert. Unter Umständen kann es von Vorteil sein, die Diamine und die Dicarbonsäuren in Form von Salzen einzusetzen ; besonders vorteilhaft ist es, die Terephthalsäure in Form eines Salzes zu verwenden.

Die für die Vorkondensation zu verwendenden Salze werden aus im wesentlichen stöchiometrischen Mengen Terephthalsäure oder Isophthalsäure und einem Diamin der Formel II in einem geeigneten inerten organischen Lösungsmittel hergestellt. Geeignete inerte organische Lösungsmittel sind zum Beispiel : cycloaliphatische Alkohole, wie Cyclopentanol und Cyclohexanol, und vor allem aliphatische Alkohole mit bis zu 6 C-Atomen, wie Methanol, Aethanol, n-Propanol, Butanole, Pentanole und Hexanole, und auch Gemische dieser Lösungsmittel mit Wasser. Das Vorkondensat kann anschliessend bei einer Temperatur zwischen etwa 260 und 300 °C unter Normaldruck und in einer Inertgasatmosphäre bis zur Bildung der erfindungsgemässen Polyamide weiterkondensiert werden. Unter Umständen kann es vorteilhaft sein, nach Beendigung der Polykondensation zum Entgasen des Polyamids Vakuum anzulegen.

Die erfindungsgemässen Polyamide können auch durch Schmelzpolykondensation der Diamine der Formel II mit im wesentlichen stöchiometrischen Mengen eines aktiven Esters der Isophthalsäure oder der Terephthalsäure oder Gemischen davon hergestellt werden. Geeignete aktivierte Ester sind insbesondere die entsprechenden Diphenylester. Die Reaktionstemperaturen liegen im allgemeinen zwischen etwa 230 und 300 °C.

Die erfindungsgemässen Polyamide können ferner in an sich bekannter Weise durch Grenzflächenpolykondensation von Diaminen der Formel II mit Isophthalsäure - und/oder Terephthalsäuredihalogeniden, besonders den entsprechenden Dichloriden, erhalten werden.

Den erfindungsgemässen Polyamiden können bei der Herstellung oder während der Verarbeitung übliche Zusätze zugegeben werden, wie Hitze- und Lichtstabilisatoren, Antioxidantien, Farbstoffe, Flammschutzmittel und dergleichen.

Die Diamine der Formel II sind neu. Sie können dadurch erhalten werden, dass man in Gegenwart eines Friedel-Krafts-Katalysators eine Verbindung der Formel III

$$R_3Z_2 \quad \text{(III)}$$

worin Z ein ersetzbares Wasserstoffatom darstellt und $R_3$ die oben angegebene Bedeutung hat, mit

mindestens zwei Mol eines als Alkylierungsmittel dienenden Aminoalkohols oder Aminoolefins oder Salzes davon mit einer organischen oder anorganischen Säure umsetzt, die befähigt sind, in der Verbindung der Formel III zwei Wasserstoffatome durch je eine Gruppe der Formel IV

$$—C(R_1)(R_2)—C_mH_{2m}NH_2 \quad (IV)$$

zu ersetzen.

Als Alkylierungsmittel verwendet man bevorzugt Aminoalkohole oder Salze davon mit einer organischen oder anorganischen Säure, die zur Einführung eines Rests der Formel IV oder zur Umwandlung in einen Rest der Formel V befähigt sind.

Als Katalysatoren können Broensted- oder Lewis-Säuren verwendet werden. Für diesen Zweck geeignete Broensted-Säuren sind Schwefelsäure, Phosphorsäure oder Chlorwasserstoffsäure ; als Lewis-Säure werden Metallhalogenid, z. B. $ZnCl_2$, $SnCl_4$ oder $FeCl_3$ und vor allem $AlCl_3$ bevorzugt. Nach Beendigung der Alkylierung können die Diamine der Formel II in üblicher Weise gereinigt und isoliert werden.

Die erfindungsgemässen Polyamide können nach an sich bekannten Verfahren zu Formkörpern der verschiedensten Art verarbeitet werden, z. B. mittels Spritzguss-, oder Extrusionsverfahren. Sie eignen sich besonders zur Herstellung von transparenten Apparaturen oder Apparateteilen aus der Schmelze.

In den folgenden Beispielen bedeuten Teile Gewichtsteile und Prozente Gewichtsprozente ; die Temperaturen sind in °C angegeben.

## Beispiele

### A) Herstellung von Diaminen der Formel II

#### Beispiel I

Zu einer Lösung von 256 Teilen 98 %iger Schwefelsäure, 48 Teilen Methanol und 7,8 Teilen Benzol gibt man unter Rühren bei Raumtemperatur (20-25 °C) 36,0 Teile 6-Hydroxy-6-methyl-2-heptylamin-Hydrochlorid (Heptaminol-Hydrochlorid) und zwar in Chargen von je 3,0 Teilen alle 6 Stunden. Nach der letzten Zugabe nach 66 Stunden wird das Reaktionsgemisch während weiterer 18 Stunden bei Raumtemperatur gerührt und dann mit Wasser verdünnt. Die wässrige Lösung wird dann mit Natriumhydroxidlösung neutralisiert, und die organische Phase wird mit Diäthyläther extrahiert, mit Wasser gewaschen und nach dem Verdampfen des Lösungsmittels destilliert. Man erhält 18,7 Teile 1,4-Bis-(6-amino-2-methylhept-2-yl)-benzol, Sdp. 180-190° bei 0,8 mbar.

#### Beispiel II

15,4 Teile Diphenyl werden nach der in Beispiel I beschriebenen Arbeitsweise mit 42,0 Teilen Heptaminol-Hydrochlorid umgesetzt. Die Destillation ergibt 29,0 Teile 4,4'-Bis-(6-amino-2-methylhept-2-yl)-diphenyl ; Sdp. 220-235° bei 0,3 mbar.

#### Beispiel III

Zu 8,5 Teilen Diphenyläther und 26,7 Teilen Aluminiumchlorid in 50 Teilen Nitromethan gibt man portionenweise 18,2 Teile Heptamino-Hydrochlorid. Nach der Zugabe wird das Reaktionsgemisch 3 Tage bei Raumtemperatur gelagert, dann auf Wasser gegossen und mit Natriumhydroxidlösung gewaschen, bis die wässrige Phase alkalisch ist. Die organische Phase wird mit Diäthyläther extrahiert, mit Wasser gewaschen, verdampft und destilliert. Man erhält 2,1 Teile 4-(6-Amino-2-methylhept-2-yl)-diphenyläther ; Sdp. 170-180° bei 0,4 mbar, gefolgt von 14,2 Teilen Bis-(2-Amino-2-methylhept-2-yl)-diphenyläther ; Sdp. 240-270° bei 0,7 mbar. Gemäss Analyse enthält diese zweite Fraktion 70 % des 4,4'-Isomeren.

#### Beispiel IV

16,8 Teile Diphenylmethan werden auf die in Beispiel III beschriebene Weise mit 36,4 Teilen Heptaminol-Hydrochlorid umgesetzt. Nach der Destillation erhält man 22,4 Teile Bis-(6-Amino-2-methylhept-2-yl)-diphenylmethan ; Sdp. 230-244° bei 0,4 mbar. Gemäss Analyse enthält diese Fraktion 73 % des 4,4'-Isomeren mit der folgenden Zusammensetzung in % :

Für $C_{29}H_{46}N_2$

| | | | |
|---|---|---|---|
| berechnet | C 82,40 | H 10,97 | N 6,63 |
| gefunden | C 82,71 | H 11,31 | N 6,55 |

#### Beispiel V

16,9 Teile Diphenylamin, 20,4 Teile 36 %ige wässrige Chlorwasserstoffsäure, 6,8 Teile wasserfreies

Zinkchlorid, 36,4 Teile Heptaminol-Hydrochlorid und 20 Teile Wasser werden 4 Tage unter Rückfluss gerührt. Nach dem Abkühlen wird das Reaktionsgemisch mit 50 Teilen Wasser behandelt, und die organische Phase wird mit Diäthyläther extrahiert, mit Wasser gewaschen, verdampft und destilliert. Nach dem Entfernen von 8,0 Teilen einer ersten Fraktion, Sdp. 146-238° bei 0,33 mbar, erhält man 29,6 Teile 4,4'-Bis-(6-amino-2-methylhept-2-yl)-diphenylamin, Sdp. 254-258° bei 0,3 mbar (70 % d. Th.).

B) Herstellung von Polyamiden

Beispiel 1

In einem mit Rührwerk, Rückflusskühler und Tropftrichter versehenen Kolben werden 2,556 g (0,015 4 Mol) Terephthalsäure in 100 ml 50 %igem Äthanol aufgeschlämmt und auf Rückflusstemperatur erhitzt. In die siedende Mischung werden aus dem Tropftrichter 5,137 g (0,015 4 Mol) 1,4-Bis-(6-amino-2-methylhept-2-yl)-benzol eingetropft. Es entsteht eine klare Lösung, aus welcher sich nach wenigen Minuten das gebildete Salz ausscheidet. Das Salz wird abfiltriert und bei 80° im Vakuum getrocknet. Ausbeute : 6,5 g (85 % d. Th.). Das Salz wird dann in ein Bombenrohr, das mit Schraubdeckel und eingebautem Überdruckventil versehen ist, gegeben. Nachdem man die Luft im Bombenrohr vollständig durch Stickstoff verdrängt hat, verschliesst man das Bombenrohr und taucht es in ein Salzbad von 270° ein. Nach kurzer Zeit ist eine klare Schmelze entstanden. Nach zwei Stunden wird die Reaktion abgebrochen, indem man das Rohr aus dem Salzbad entfernt und den Überdruck durch Öffnen des Ventils ablässt. Das erstarrte Vorkondensat wird aus dem Bombenrohr entfernt und in ein Kondensationsgefäss übergeführt. Unter strengem Ausschluss von Luft und dauerndem Durchleiten von Stickstoff bei einer Temperatur von 280° wird die gebildete Schmelze polykondensiert, wobei das entstandene Wasser durch den Stickstoffstrom laufend entfernt wird. Nach 5 Stunden wird die Polykondensation abgebrochen. Beim Abkühlen erstarrt die Schmelze zu einer glasklaren farblosen Masse.

2-3 g des so erhaltenen Polyamids werden mittels einer beheizbaren hydraulischen Presse zu einer Folie von etwa 0,3 bis 0,5 mm Dicke verpresst. Zur Bestimmung der Wasseraufnahme wird die Folie bei Raumtemperatur einer relativen Luftfeuchtigkeit von 65 % ausgesetzt, bis keine Gewichtszunahme mehr festgestellt werden kann. Die reduzierte Lösungsviskosität des erhaltenen Polyamids wird an einer 0,5 %igen Lösung in m-Kresol bei 25° gemessen. Die Glasumwandlungstemperatur Tg wird im Differentialkalorimeter (DSC) bestimmt. Die Resultate sind in Tabelle 1 zusammengefasst.

Beispiele 2-5

Auf analogue Weise wie in Beispiel 1 beschrieben, werden äquimolare Menge weiterer Diamine und Terephthalsäure zu den entsprechenden Salzen umgesetzt, die dann wie in Beispiel 1 beschrieben polykondensiert werden. Es werden die folgenden Reaktanden verwendet :

Beispiel 2 : 4,4'-Bis-(6-amino-2-methyl-hept-2-yl)-diphenyl und Terephthalsäure ;

Beispiel 3 : Bis-(6-amino-2-methyl-hept-2-yl)-diphenyläther (Isomerengemisch) und Terephthlasäure ;

Beispiel 4 : Bis-(6-amino-2-methyl-hept-2-yl)-diphenylmethan (Isomerengemisch) und Terephthalsäure ;

Beispiel 5: 4,4'-Bis-(6-amino-2-methyl-hept-2-yl)-diphenylamin und Terephthalsäure.

Die Eigenschaften der erhaltenen Polyamide werden wie in Beispiel 1 beschrieben bestimmt. Die Resultate sind in Tabelle 1 zusammengefasst.

Beispiele 6 bis 10

6,137 g (0,018 4 Mol) 1,4-Bis-(6-amino-2-methyl-hept-2-yl)-benzol und 3,056 g (0,018 4 Mol) Isophthalsäure werden in ein Bombenrohr, das mit Schraubdeckel und eingebautem Überdruckventil versehen ist, eingewogen. Nachdem man die Luft im Bobenrohr vollständig mit Stickstoff verdrängt hat, verschliesst man das Bombenrohr. Dieses wird dann in ein 270° warmes Salzbad eingetaucht. Nach kurzer Zeit bildet sich eine klare Schmelze. Nach 2 Stunden wird die Reaktion unterbrochen, indem man das Rohr aus dem Salzbad entfernt und den Überdruck durch Öffnen des Ventils ablässt. Das erstarrte Vorkondensat wird aus dem Rohr entfernt und in ein Kondensationsgefäss übergeführt. Die weitere Polykondensation wird dann bei 280° durchgeführt, wie in Beispiel 1 beschrieben.

Auf analoge Weise werden die folgenden Reaktanden polykondensiert :

Beispiel 7 : 4,4'-Bis-(6-amino-2-methyl-hept-2-yl)-diphenyl und Isophthalsäure ;

Beispiel 8 : Bis-(6-amino-2-methyl-hept-2-yl)-diphenyläther (Isomerengemisch) und Isophthalsäure ;

Beispiel 9 : Bis-(6-amino-2-methyl-hept-2-yl)-diphenylmethan (Isomerengemisch) und Isophthalsäure ;

Beispiel 10 : 4,4'-Bis-(6-amino-2-methyl-hept-2-yl)-diphenylamin und Isophthalsäure.

Die Eigenschaften der erhaltenen Polyamide werden wie in Beispiel 1 beschrieben bestimmt. Die Resultate sind in Tabelle 1 zusammengefasst.

Tabelle 1

| Beispiel Nr. | reduzierte Lösungsviskosität $\eta_{red}$ dl/g | Glasumwandlungstemperatur Tg °C | Wasseraufnahme 65% relat. Luftfeuchtigkeit - Gew.% |
|---|---|---|---|
| 1 | 1,13 | 135 | <1 |
| 2 | 0,72 | 158 | <1 |
| 3 | 1,59 | 137 | <1 |
| 4 | 0,70 | 140 | <1 |
| 5 | 0,68 | 141 | <1 |
| 6 | 0,81 | 126 | <1 |
| 7 | 1,21 | 142 | <1 |
| 8 | | 130 | <1 |
| 9 | 0,97 | 121 | <1 |
| 10 | 0,62 | 132 | <1 |

**Ansprüche**

1. Transparente Polyamide mit einer reduzierten spezifischen Viskosität von mindestens 0,3 dl/g, gemessen an einer 0,5 %-igen Lösung in m-Kresol bei 25 °C, die aus wiederkehrenden Sturkturelementen der Formel I

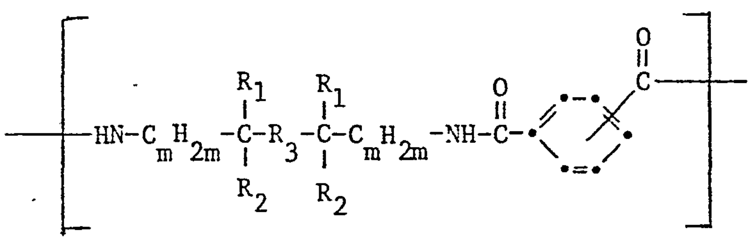 (I)

bestehen, worin

die beiden m unabhängig voneinander eine ganze Zahl von 4 bis 16,
die beiden $R_1$ unabhängig voneinander $C_{1-3}$-Alkyl,
die beiden $R_2$ unabhängig voneinander $C_{1-6}$-Alkyl und
$R_3$ 1,4-Phenylen oder

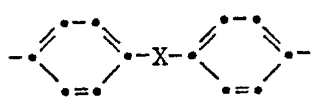

darstellen, worin X die direkte Bindung, $-CH_2-$, $-O-$, $-S-$ oder $-NH-$ darstellt und wobei die Carbonylgruppen in 1,3- und/oder 1,4-Stellung an den Benzolring gebunden sind.

2. Polyamide nach Anspruch 1 aus wiederkehrenden Strukturelementen der Formel I, worin die beiden m dieselbe Bedeutung haben, die beiden $R_1$ identische Alkylgruppen sind und die beiden $R_2$ gleiche Alkylgruppen darstellen.

3. Polyamide nach Anspruch 1 aus wiederkehrenden Sturkturelementen der Formel I, worin die $R_1$ je Methyl oder Äthyl, die $R_2$ je $C_{1-4}$-Alkyl, die $-C_mH_{2m}-$ je $-(CH_2)_3-CH(CH_3)-$, $-(CH_2)_8-CH(R_4)-$ oder $-(CH_2)_9-CH(R_4)-$ mit an das Stickstoffatom gebundener $-CH$-Gruppe und $R_4$ $C_{1-4}$-Alkyl darstellen, $R_3$ 1,4-Phenylen oder eine Gruppe

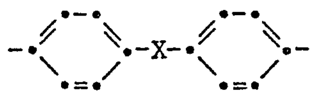

ist worin X die direkte Bindung, —$CH_2$—, —O— oder —NH— bedeutet, wobei die Carbonylgruppen entweder in 1,3- oder in 1,4-Stellung an den Benzolring gebunden sind.

4. Polyamide nach Anspruch 1 aus wiederkehrenden Strukturelementen der Formel I, worin die $R_1$ je Methyl, die $R_2$ je Methyl oder Äthyl, die —$C_mH_{2m}$— je

$-(CH_2)_3-CH(CH_3)-$, 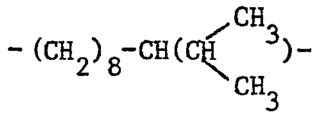 oder 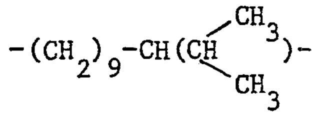

und $R_3$ 1,4-Phenylen oder eine Gruppe

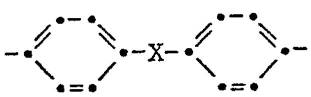

bedeuten, worin X die direkte Bindung, —$CH_2$—, —O— oder —NH— ist, wobei die Carbonylgruppen entweder in 1,3- oder in 1,4-Stellung an den Benzolring gebunden sind.

5. Verfahren zur Herstellung von transparenten Polyamiden aus wiederkehrenden Sturkturelementen der Formel I nach Anspruch 1, dadurch gekennzeichnet, dass man ein Diamin der Formel II

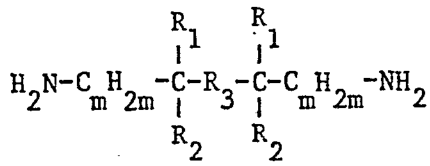 (II)

worin m, $R_1$, $R_2$ und $R_3$ die im Anspruch 1 angegebene Bedeutung haben, mit Isophthalsäure und/oder Terephthalsäure oder amidbildenden Derivaten davon umsetzt.

6. Verwendung der Transparenten Polyamide nach Anspruch 1 zur Herstellung von Formkörpern.

**Claims**

1. A transparent polyamide having a reduced specific viscosity of at least 0.3 dl/g, measured on a 0.5 % solution in m-cresol at 25 °C, and consisting of recurring structural elements of formula I

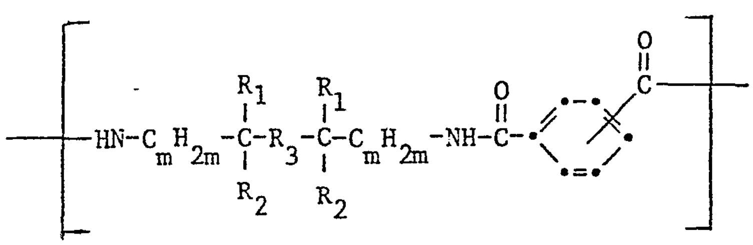 (I)

wherein

the two m independently of each other are an integer of from 4 to 16,
the two $R_1$ independently of each other are $C_{1-3}$ alkyl,
the two $R_2$ independently of each other are $C_{1-6}$ alkyl and
$R_3$ is 1,4-phenylene or

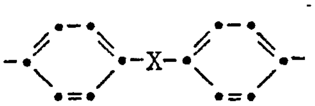

wherein X is the direct bond, —$CH_2$—, —O—, —S— or —NH—, and whereby the carbonyl groups are linked to the benzene ring in 1,3- and/or 1,4-position.

2. A polyamide as claimed in claim 1 consisting of recurring structural elements of formula I wherein

the two m have the same meaning, the two $R_1$ represent identical alkyl groups and the two $R_2$ each represent the same alkyl group.

3. A polyamide as claimed in claim 1 consisting of recurring structural elements of formula I wherein the $R_1$ are each methyl or ethyl, the $R_2$ are each $C_{1-4}$ alkyl, the $—C_mH_{2m}—$ are each $—(CH_2)_3—CH(CH_3)—$, $—(CH_2)_8—CH(R_4)—$ or $—(CH_2)_9CH(R_4)—$ wherein the group —CH— is linked to the nitrogen atom and $R_4$ is $C_{1-4}$ alkyl, $R_3$ is 1,4-phenylene or a group

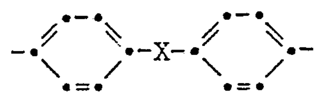

wherein X is the direct bond, $—CH_2—$, —O— or —NH—, the carbonyl groups being linked to the benzene ring either in 1,3- or 1,4-position.

4. A polyamide as claimed in claim 1 consisting of recurring structural elements of formula I, wherein the $R_1$ are each methyl, the $R_2$ are each methyl or ethyl, the $—C_mH_{2m}—$ are each

$-(CH_2)_3-CH(CH_3)-$, 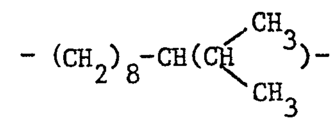 or 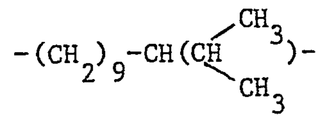

and $R_3$ is 1,4-phenylene or a group

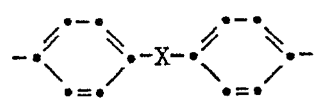

wherein X is the direct bond, $—CH_2—$, —O— or —NH—, the carbonyl groups being linked to the benzene ring either in 1,3- or 1,4-position.

5. A process for producing transparent polyamides consisting of recurring structural elements of formula I as claimed in claim 1, which comprises reacting a diamine of formula II

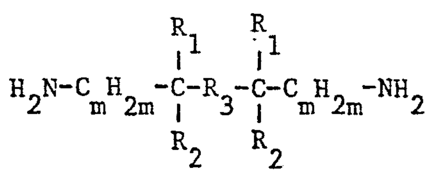 (II)

wherein m, $R_1$, $R_2$ and $R_3$ have the meanings given in claim 1, with isophthalic acid and/or or terephthalic acid or amide-forming derivatives thereof.

6. Use of a transparent polyamide as claimed in claim 1 for the manufacture of shaped articles.

## Revendications

1. Polyamides transparents ayant une viscosité spécifique réduite d'au moins 0,3 dl/g, mesurée dans le cas d'une solution à 0,5 % dans du m-crésol à 25 °C, qui consistent en des éléments structurels ou motifs récurrents de formule I

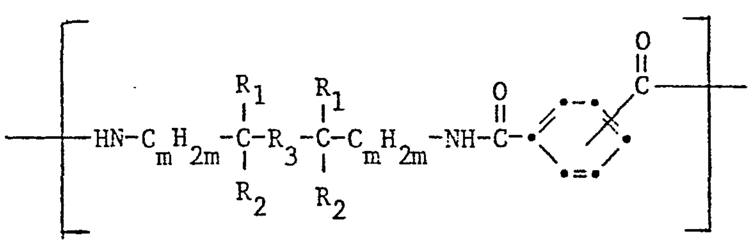 (I)

dans laquelle

les deux m représentent, indépendamment l'un de l'autre, un nombre entier valant 4 à 16,
les deux $R_1$ représentent, indépendamment l'un de l'autre, un groupe alkyle en $C_1$ à $C_3$,
les deux $R_2$ représentent, indépendamment l'un de l'autre, un groupe alkyle en $C_1$ à $C_6$, et
$R_3$ représente un groupe phénylène-1,4 ou bien

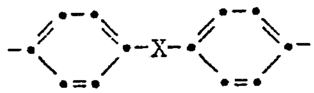

où X représente une liaison directe, $—CH_2—$, —O—, —S— ou —NH—, et des groupes carbonyles sont fixés sur le noyau benzénique en position 1,3 et/ou 1,4.

2. Polyamides selon la revendication 1, constitués de motifs récurrents de formule I, dans laquelle les deux m ont le même sens, les deux $R_1$ sont des groupes alkyles identiques et les deux $R_2$ représentent les mêmes groupes alkyles.

3. Polyamides selon la revendication 1, formés de motifs structurels récurrents de formule I, dans laquelle les $R_1$ représentent chacun un groupe méthyle ou éthyle, les $R_2$ représentent chacun un groupe alkyle en $C_1$ à $C_4$, les $—C_mH_{2m}—$ représentent chacun $—(CH_2)_3—CH(CH_3)—$, $—(CH_2)_8—CH(R_4)—$ ou $—(CH_2)_9—CH(R_4)—$ avec un groupe —CH— fixé à l'atome d'azote, et $R_4$ représente un groupe alkyle en $C_1$ à $C_4$, $R_3$ représente un groupe phénylène-1,4 ou un groupe

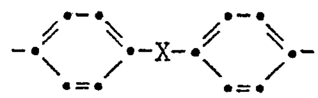

où X représente une liaison directe, $—CH_2—$, —O— ou —NH—, les groupes carbonyles étant fixés sur le noyau benzénique en position 1,3 ou 1,4.

4. Polyamides selon la revendication 1, formés de motifs structurels récurrents de formule I, dans laquelle les $R_1$ représentent chacun un groupe méthyle, les $R_2$ représentent chacun un groupe méthyle ou éthyle, les $—C_mH_{2m}—$ représentent chacun

$-(CH_2)_3-CH(CH_3)-$, 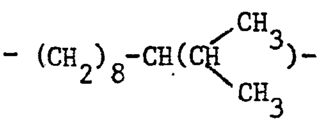 ou 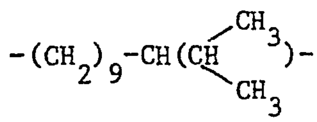

et $R_3$ représente un groupe phénylène-1,4 ou un groupe

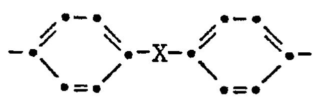

où X représente une liaison directe, $—CH_2—$, —O— ou —NH—, et les groupes carbonyles sont fixés sur le noyau benzénique en position 1,3 ou 1,4.

5. Procédé de préparation de polyamides transparents formés de motifs structurels récurrents de formule I selon la revendication 1, caractérisé en ce qu'on fait réagir une diamine de formule II

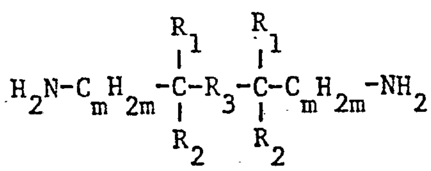 (II)

(dans laquelle m, $R_1$, $R_2$ et $R_3$ ont le sens indiqué à la revendication 1) avec l'acide isophtalique et/ou l'acide téréphtalique ou avec leurs dérivés générateurs d'amides.

6. Utilisation des polyamides transparents selon la revendication 1 pour la production d'objets façonnés.